# EUROPÄISCHE PATENTSCHRIFT

(11) **EP 0 743 317 B1**
(45) Veröffentlichungstag und Bekanntmachung des Hinweises auf die Patenterteilung: **28.08.2002**
(21) Anmeldenummer: 96107322.8
(22) Anmeldetag: 09.05.1996
(51) Int. Cl.: C07F 17/00, C08F 4/64

(54) **Metallocene mit einem heterocyclischen Ring und Katalysatoren, die sie enthalten**
Metallocenes comprising a heterocycle and catalysts containing them
Métallocènes contenant un hétérocycle et catalyseur contenant ces composés

(30) Priorität: 16.05.1995 DE 19517851
(43) Veröffentlichungstag der Anmeldung: 20.11.1996
(73) Patentinhaber: Basell Polyolefine GmbH, 67056 Ludwigshafen (DE)
(72) Erfinder: Küber, Frank, Dr., 61440 Oberursel (DE); Riedel, Michael, Dr., 60529 Frankfurt (DE); Bachmann, Bernd, Dr., 65817 Eppstein (DE); Winter, Andreas, Dr., 61479 Glashütten (DE)

(56) Entgegenhaltungen:
- EP-A- 0 379 758
- EP-A- 0 545 304
- EP-A- 0 574 597
- EP-A- 0 608 054
- EP-A- 0 611 773
- EP-A- 0 638 593
- EP-A- 0 650 973

## Beschreibung

Die vorliegende Erfindung bezieht sich auf eine Metallocenverbindung mit speziellen Cyclopentadienylderivaten als Liganden, die vorteilhaft als Katalysatorkomponente bei der Herstellung von Polyolefinen verwendet werden kann.

Polyolefine besitzen Bedeutung für die Herstellung von Folien, Platten oder Großhohlkörpern oder Formteilen, wie beispielsweise Rohren.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt.

Lösliche Metallocenverbindungen auf der Basis von Bis(cyclopentadienyl)zirkondialkyl bzw. dihalogenid in Kombination mit oligomeren Aluminoxanen können Ethylen mit guter und Propylen mit mäßiger Aktivität polymerisieren. Man erhält Polyethylen mit enger Molmassenverteilung und mittlerer Molmasse. Das auf diese Weise hergestellte Polypropylen ist ataktisch und hat eine sehr niedrige Molmasse.

Die Herstellung von isotaktischem Polypropylen gelingt mit Hilfe des Ethylenbis(4,5,6,7-tetrahydro-1-indenyl)zirkoniumdichlorids zusammen mit einem Aluminoxan in einer Suspensionspolymerisation (vgl. EP 185 918). Das Polymer besitzt eine enge Molmassenverteilung.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (EP 0 302 424)

Weiterhin sind Katalysatoren auf der Basis von Ethylenbisindenylhafniumdichlorid und Ethylenbis(4,5,6,7-tetrahydro-1-indenyl)hafniumdichlorid und Methylaluminoxan bekannt, mit denen durch Suspensionspolymerisation höhermolekulare Polypropylene hergestellt werden können (vgl. J. Am. Chem. Soc. (1987), 109, 6544).

Weiterhin sind Metallocene bekannt, die durch eine Brücke fixierte aromatische π-Liganden haben, die in 2-Stellung (EP 0 485 822) oder in 2- und 4-Stellung (EP 0 530 647) Substituenten tragen.

Weiterhin sind aus der EP 0 608 054 Metallocene bekannt, die sauerstoffhaltige cyclische Reste enthalten.

Es bestand daher die Aufgabe ein neuartiges Katalysatorsystem zu finden, das sich zur Herstellung von Polyolefinen eignet.

Überraschenderweise wurde nun gefunden, daß diese Aufgabe gelöst wird durch Metallocene mit speziellen Cyclopentadienylderivaten als Liganden.

Mindestens ein Ligand der erfindungsgemäßen Metallocene ist ein Cyclopentadienylderivat, welches mindestens ein Heteroatom als Bestandteil eines an die Cyclopentadienylgruppe (z.B. Methylcyclopentadienyl, Indenyl, 2-Methyl-Indenyl oder Fluorenyl) substituierten oder annellierten Ringsystems enthält.

Die vorliegende Erfindung betrifft somit eine Metallocenverbindung der Formel I

R⁵ ₙCp¹Cp²M¹R¹R² (I)

worin Cp¹ und Cp² unabhängig voneinander gleich oder verschieden sind und eine unsubstituierte oder substituierte Cyclopentadienylgruppe bedeuten, n = Null oder 1 ist, R⁵ eine Verbrückung ist, M¹ ein Metall der Gruppe IVb, Vb oder Vlb des Periodensystems der Elemente ist, R¹ und R² gleich oder verschieden sind und ein Wasserstoffatom, eine C₁-C₁₀-Alkylgruppe, eine C₁-C₁₀-Alkoxygruppe, eine C₆-C₁₄-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe, ein Halogenatom oder eine . NR⁶₂-Gruppe, worin R⁶ gleich oder verschieden eine C₁-C₁₀-Alkyl- oder eine C₆-C₁₄-Arylgruppe bedeuten, dadurch gekennzeichnet, daß mindestens eine der beiden Gruppen Cp¹ und Cp² eine substituierte Cyclopentadienylgruppe ist, welche mindestens einen cyclischen C₅-C₃₀-kohlenstoffhaltigen Rest trägt, der mindestens ein Heteroatom im Ring enthält, oder ein anneliertes C₂-C₃₀kohlenstoffhaltiges Ringsystem trägt, welches mindestens ein Heteroatom im Ring enthält, und wobei der cyclische C₅-C₃₀-kohlenstoffhaltige Rest und das annelierte C₂-C₃₀-kohlenstoffhaltige Ringsystem gesättigt oder ungesättigt sein können und N, P oder S als Heteroatome im Ring enthalten, die auch Reste tragen können, die nicht Bestandteil des Rings sind. Beispiele für solche Reste sind Sauerstoff
oder Reste R¹⁴, welche eine C₁-C₄₀-kohlenstoffhaltige Gruppe bedeuten, wie eine C₁-C₁₀-, vorzugsweise C₁-C₃-Alkylgruppe, eine C₁-C₁₀-, vorzugsweise C₁-C₃-Alkoxygruppe, eine C₆-C₁₄-, vorzugsweise C₆-C₁₀-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₁-Alkylarylgruppe, eine C₈-C₄₀-, vorzugsweise C₈-C₁₂-Arylalkenylgruppe, ein Halogenatom, vorzugsweise Chlor oder eine NR⁶₂-Gruppe, worin R⁶ eine C₁-C₁₀-, vorzugsweise C₁-C₄-Alkylgruppe oder eine C₆-C₁₄-, vorzugsweise C₆-Arylgruppe bedeuten. Beispiele für substituierte Ringheteroatome sind
〉NR¹⁴, 〉PR¹⁴, 〉P(O)R¹⁴, 〉SO oder 〉SO₂

Bei der erfindungsgemäßen Metallocenverbindung der Formel 1 ist M¹ ein Metall der Gruppe IVb, Vb oder Vlb des Periodensystems der Elemente, beispielsweise Titan, Zirkonium, Hafnium, Vanadium, Niob, Tantal, Chrom, Molybdän oder Wolfram, vorzugsweise ein Metall der Gruppe IVb wie Zirkonium, Hafnium und Titan ist.

Die Reste R¹ und R² sind gleich oder verschieden und bedeuten vorzugsweise eine C₁-C₃-Alkylgruppe, eine C₁-C₃-Alkoxygruppe, eine C₆-C₁₀-Arylgruppe, eine C₆-C₈-Aryloxygruppe, eine C₂-C₄-Alkenylgruppe, eine C₇-C₁₀-Arylalkylgruppe, eine C₇-C₁₁-Alkylarylgruppe, eine C₈-C₁₂-Arylalkenylgruppe, ein Chlor oder eine NR⁶₂-Gruppe, worin R⁶ gleich oder verschieden vorzugsweise eine C₁-C₄-Alkyl- oder eine C₆- Arylgruppe bedeuten.

Wenn n = Null ist, handelt es sich um ein unverbrücktes Metallocen, welches keine Verbrückung R⁵ aufweist. Wenn n = 1 ist, ist das Metallocen verbrückt.

R⁵ ist eine Verbrückung, vorzugsweise 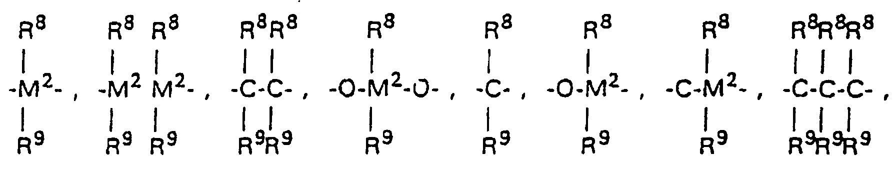 =BR⁸, =AlR⁸, -Ge-, -O-, -S-, =SO, =SO₂, =NR⁸, = CO, =PR⁸ oder =P(O)R⁸, , wobei jedes R⁸ und jedes R⁹ unabhängig von anderen R⁸ und R⁹ gleich oder verschieden ist und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkyl-, vorzugsweise CF₃-Gruppe, eine C₆-C₁₄-, vorzugsweise C₆-C₁₀-Arylgruppe, eine C₆-C₁₀-Fluoraryl-, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁸ und R⁹ jeweils mit den sie verbindenden Atomen einen oder mehrere Ringe bilden. M² ist Silizium, Germanium oder Zinn, vorzugsweise Silizium oder Germanium.

Beispiele für substituierte Cyclopentadienylgruppen sind: Methylcyclopentadienyl, Methyl-tert.-butylcyclopentadienyl, tert.-Butylcyclopentadienyl, Iso-Propylcyclopentadienyl, Dimethylcyclopentadienyl, Dimethylcyclopentadienyl, Trimethylethylcyclopentadienyl, 5-Phenylcyclopentadienyl, Diphenylcyclopentadienyl, Indenyl, 2-Methylindenyl, 2-Ethylindenyl, 3-methylindenyl, 3-tert.-Butylindenyl, 3-Trimethylsilylindenyl, 2-Methyl-4-phenylindenyl, 2-Ethyl-4-phenylindenyl, 2-Methyl-4-naphthylindenynl, 2-Methyl-4-iso-propyl-indenyl, Benzoindenyl, 2-Methyl-4,5-benzoindenyl, 2-Methyl-α-acenaphthindenyl, 2-Methyl-4,6-di-iso-propylindenyl, Fluorenyl, 4-Methylfluorenyl oder 2,7-Di-tert.-butylfluorenyl.

Die substituierte Cyclopentadienylgruppen trägt vorzugsweise einen C₅-C₁₀kohlenstoffhaltigen Rest, der mindestens ein Heteroatom im Ring enthält, oder trägt vorzugsweise ein anelliertes C₃-C₂₀-, insbesondere C₄-C₁₀-kohlenstoffhaltiges Ringsystem,
welches mindestens ein Heteroatom im Ring enthält. Bei der Bestimmung der Kohlenstoffatomanzahl des anellierten heteroatomhaltigen C₂-C₃₀kohlenstoffhaltigen Ringsystems werden die Ringkohlenstoffatome d.er Cyclopentadienylgruppe nicht mitgezählt. So weist z.B. der anellierte heteroatomhaltige Ring von 4,5-(2-azobenzo)indenyl drei Ringkohlenstoffatome auf.

Bevorzugte Metallocenverbindungen der Formel (I) haben die Formel II 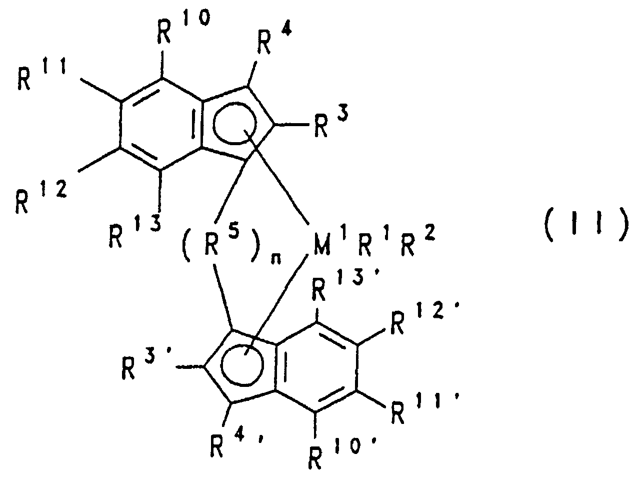 , worin
M¹ ein Metall der Gruppe IVb, Vb oder VIb des Periodensystems der Elemente ist,
R¹ und R² gleich oder verschieden sind und ein Wasserstoffatom, eine C₁-C₁₀-Alkylgruppe, eine C₁-C₁₀-Alkoxygruppe, eine C₆-C₁₄-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe, ein Halogenatom oder eine NR⁶₂-Gruppe, worin R⁶ gleich oder verschieden eine C₁-C₁₀-Alkyl- oder eine C₆-C₁₄-Arylgruppe bedeuten,
die Reste R³ und R^{3'} gleich oder verschieden sind und ein Wasserstoffatom, ein Halogenatom, eine C₁-C₁₀-Alkylgruppe, die halogeniert sein kann; eine C₆-C₁₄-Arylgruppe, die halogeniert sein kann, einen NR⁷₂-, -SR⁷-, -OsiR⁷₃-, -SiR⁷₃- oder -PR⁷₂-Rest bedeuten, worin R⁷ ein Halogenatom, eine C₁-C₁₀-Alkylgruppe oder eine C₆-C₁₄-Arylgruppe ist,
R⁴ und R^{4'} gleich oder verschieden sind und ein Wasserstoffatom, ein Halogenatom, eine C₁-C₁₀-Alkylgruppe, die halogeniert sein kann, eine C₆-C₁₄-Arylgruppe, die halogeniert sein kann, einen NR⁷₂-, -SR⁷-, -OsiR⁷₃-, -SiR⁷₃oder -PR⁷₂-Rest bedeuten, worin R⁷ ein Halogenatom, eine C₁-C₁₀-Alkylgruppe oder eine C₆-C₁₄-Arylgruppe ist,
n = Null oder 1 ist,
R⁵ eine Verbrückung bedeutet, vorzugsweise 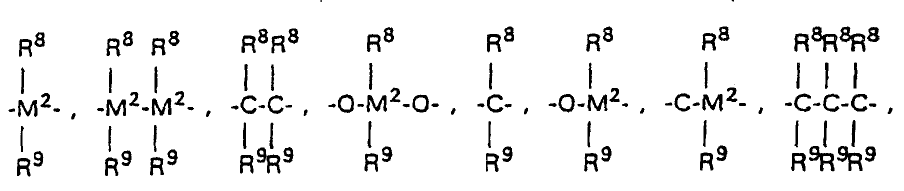 =BR⁸, =AlR⁸, -Ge-, -O-, -S-, =SO, =SO₂, =NR⁸, =CO, =PR⁸ oder =P(O)R⁸ ist, wobei jedes R⁸ und jedes R⁹ unabhängig von anderen R⁸ und R⁹ gleich oder verschieden ist und ein Wasserstoffatom, ein Halogenatom, oder eine C₁-C₄₀kohlenstoffhaltige Gruppe wie eine C₁-C₁₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl- oder eine C₈-C₄₀-Arylalkenylgruppe bedeuten, oder R⁸ und R⁹ jeweils mit den sie verbindenden Atomen einen oder mehrere Ringe bilden,
M² Silizium, Germanium oder Zinn ist und
und R¹⁰, R¹¹, R¹², R¹³, R^{10'}, R^{11'}, R^{12'} und R^{13'} gleich oder verschieden sind und ein Wasserstoffatom, eine C₁-C₁₀-Alkyl-, eine C₁-C₁₀-Fluoralkyl-, eine C₆-C₃₀-Aryl-, eine C₆-C₁₀-Fluoraryl-, eine C₂-C₁₀-Alkenyl-, eine C₇-C₄₀-Arylalkyl-, eine C₇-C₄₀-Alkylaryl- oder eine C₈-C₄₀-Arylalkenylgruppe sind, oder zwei oder mehr der Reste R¹⁰, R¹¹, R¹², R¹³, R^{10'}, R^{11'}, R^{12'} und R^{13'} zusammen ein C₄-C₃₀-Ringsystem bilden, wobei mindestens einer der Reste R¹⁰, R¹¹, R¹², R¹³, R^{10'}, R^{11'}, R^{12'} und R^{13'} einen cyclischen C₅-C₃₀-Kohlenwasserstoffrest bedeutet, der mindestens ein Heteroatom im Ring enthält, oder zwei oder mehr der Reste R¹⁰, R¹¹, R¹², R¹³, R^{10'}, R^{11'}, R^{12'} und R^{13'} zusammen ein anneliertes C₂-C₃₀-kohlenstoffhaltiges Ringsystem bilden, welches mindestens ein Heteroatom im Ring enthält.

Bei der Bestimmung der Kohlenstoffatomanzahl des anellierten heteroatomhaltigen C₂-C₃₀-kohlenstoffhaltigen Ringsystems werden die Ringkohlenstoffatome der Cyclopentadienylgruppe nicht mitgezählt. So weist z.B. der anellierte heteroatomhaltige Ring von 4,5-(2-azobenzo)indenyl drei Ringkohlenstoffatome auf. Der cyclische C₅-C₃₀-kohlenstoffhaltige Rest und das anellierte C₂-C₃₀-Ringsystem können gesättigt oder ungesättigt (z.B. aromatisch) sein und enthalten als Heteroatome im Ring bevorzugt N, P oder S, die auch Reste tragen können, die nicht Bestandteil des Rings sind. Beispiele für solche Reste sind Sauerstoff
oder Reste R¹⁴, welche eine C₁-C₄₀-kohlenstoffhaltige Gruppe bedeuten, wie eine C₁-C₁₀-, vorzugsweise C₁-C₃-Alkylgruppe, eine C₁-C₁₀-, vorzugsweise C₁-C₃-Alkoxygruppe, eine C₆-C₁₄-, vorzugsweise C₆-C₁₀-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₁-Alkylarylgruppe, eine C₈-C₄₀-, vorzugsweise C₈-C₁₂-Arylalkenylgruppe, ein Halogenatom, vorzugsweise Chlor oder eine NR⁶₂-Gruppe bedeuten, worin R⁶ eine C₁-C₁₀-, vorzugsweise C₁-C₄-Alkylgruppe oder C₆-C₁₄-, vorzugsweise C₆-Arylgruppe bedeuten. Beispiele für substituierte Ringheteroatome sind
〉NR¹⁴, 〉PR¹⁴, 〉P(O)R¹⁴, 〉SO oder 〉SO₂

Bei der erfindungsgemäßen Metallocenverbindung der Formel II ist M¹ ein Metall der Gruppe IVb, Vb oder VIb des Periodensystems der Elemente, beispielsweise Titan, Zirkonium, Hafnium, Vanadium, Niob, Tantal, Chrom, Molybdän oder Wolfram, vorzugsweise ein Metall der Gruppe IVb wie Zirkonium, Hafnium und Titan ist.

Die Reste R¹ und R² sind gleich oder verschieden und bedeuten vorzugsweise eine C₁-C₃-Alkylgruppe, eine C₁-C₃-Alkoxygruppe, eine C₆-C₁₀-Arylgruppe, eine C₆-C₈-Aryloxygruppe, eine C₂-C₄-Alkenylgruppe, eine C₇-C₁₀-Arylalkylgruppe, eine C₇-C₁₁-Alkylarylgruppe, eine C₈-C₁₂-Arylalkenylgruppe, ein Chlor oder eine NR⁶₂-Gruppe, worin R⁶ gleich oder verschieden vorzugsweise eine C₁-C₄-Alkyl- oder eine C₆- Arylgruppe bedeuten.

Die Reste R³ und R^{3'} sind gleich oder verschieden und bedeuten ein Wasserstoffatom, ein Halogenatom, bevorzugt Fluor, Chlor oder Brom, eine C₁-C₁₀-, vorzugsweise C₁-C₄-Alkylgruppe, die halogeniert sein kann, eine C₆-C₁₄-, vorzugsweise C₆-C₁₀-Arylgruppe, die halogeniert sein kann, einen -NR⁷₂-, -SR⁷-, -OSiR⁷₃-, -SiR⁷₃- oder -PR⁷₂-Rest, wobei R⁷ ein Halogenatom; vorzugsweise Chlor, oder eine C₁-C₁₀-, vorzugsweise C₁-C₄-Alkylgruppe oder eine C₆-C₁₄-, vorzugsweise C₆-C₁₀-Arylgruppe, ist.

Die Reste R⁴ und R^{4'} sind gleich oder verschieden und bedeuten ein Wasserstoffatom, ein Halogenatom, bevorzugt Fluor, Chlor oder Brom, eine C₁-C₁₀-, vorzugsweise C₁-C₄-Alkylgruppe, die halogeniert sein kann, eine C₆-C₁₄-, vorzugsweise C₆-C₁₀-Arylgruppe, einen -NR⁷₂-, -SR⁷-, -OSiR⁷₃-, -SiR⁷₃- oder -PR⁷₂-Rest, wobei R⁷ ein Halogenatom, vorzugsweise Chlor, oder eine C₁-C₁₀-, vorzugsweise C₁-C₄-Alkylgruppe oder eine C₆-C₁₄-, vorzugsweise C₆-C₁₀-Arylgruppe sein ist.

Wenn n = Null ist, handelt es sich um ein unverbrücktes Metallocen, welches keine Verbrückung R⁵ aufweist. Wenn n = 1 ist, ist das Metallocen verbrückt.

R⁵ ist eine Verbrückung, vorzugsweise 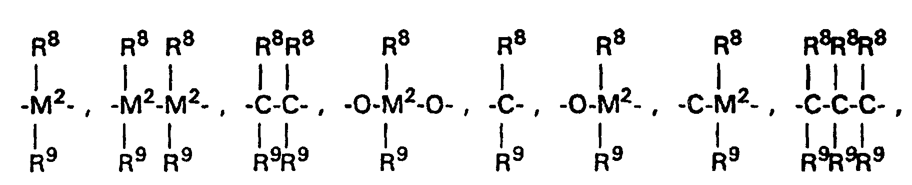 =BR⁸, =AIR⁸, -Ge-, -O-, -S-, =SO, =SO₂, =NR⁸, =CO, =PR⁸ oder =P(O)R⁸, , wobei jedes R⁸ und jedes R⁹ unabhängig von anderen R⁸ und R⁹ gleich oder verschieden ist und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkyl-, vorzugsweise CF₃-Gruppe, eine C₆-C₁₄-, vorzugsweise C₆-C₁₀-Arylgruppe, eine C₆-C₁₀-Fluoraryl-, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁸ und R⁹ jeweils mit den sie verbindenden Atomen einen oder mehrere Ringe bilden. M² ist Silizium, Germanium oder Zinn, vorzugsweise Silizium oder Germanium.

Für Verbindungen der Formel II gilt bevorzugt, daß
M¹ Zirkonium oder Hafnium ist,
die Reste R¹ und R² gleich oder verschieden, bevorzugt gleich sind und eine C₁-C₄-Alkylgruppe, eine NR⁶₂-Gruppe, worin R⁶ einen C₁-C₄-Alkylrest bedeutet oder ein Halogenatom bedeuten,
die Reste R³ und R^{3'} gleich oder verschieden, bevorzugt gleich sind, und eine C₁-C₄-Alkylgruppe, wie Methyl, Ethyl oder Isobutyl oder eine C₆-C₁₀-Arylgruppe, wie Phenyl bedeuten,
die Reste R⁴ und R^{4'} gleich sind und ein Wasserstoffatom bedeuten,
R⁵ 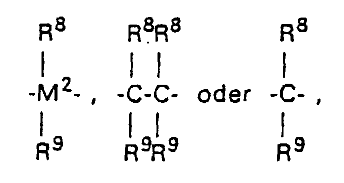 bedeutet, wobei M² Silizium oder Germanium ist und R⁸ und R⁹ gleich oder verschieden, bevorzugt gleich sind, und eine C₁-C₄-Alkylgruppe wie Methyl, Ethyl oder Isobutyl oder eine C₆-C₁₀-Arylgruppe, wie Phenyl ist,
R¹⁰ und R^{10'} gleich oder verschieden, bevorzugt gleich sind, und einen gesättigten oder ungesättigten cyclischen C₅-C₃₀kohlenstoffhaltigen Rest bedeuten, der im Ring mindestens ein Heteroatom wie N oder S enthält, welches Reste R¹⁴ wie eine C₁-C₄-Alkylgruppe tragen kann,
R¹¹, R¹², R^{11'}, R^{12'} gleich oder verschieden sind, bevorzugt R¹¹ gleich R^{11'} und R¹² gleich R^{12'} ist, und ein Wasserstoffatom, einen C₁-C₁₀-kohlenstoffhaltigen Rest wie C₁-C₄-Alkyl oder C₆-C₁₀-Aryl, oder einen gesättigten oder ungesättigten cyclischen C₃-C₂₀-kohlenstoffhaltigen Rest bedeuten mit mindestens einem Heteroatom im Ring wie N oder S, welches Reste R¹⁴ wie eine C₁-C₄-Alkylgruppe tragen kann,
oder mindestens zwei der Reste R¹⁰, R¹¹ und R¹² bzw. R^{10'}, R^{11'} und R^{12'} zusammen ein anelliertes C₂-C₂₀-Ringsystem bilden, welches mindestens ein Heteroatom im Ring enthält,
und R¹³ gleich R^{13'} ist und ein Wasserstoffatom bedeutet.

Besonders bevorzugt sind Verbindungen der Formel II, bei denen M¹ Zirkonium ist,
R¹ und R² gleich sind und Chlor bedeuten, die Reste R³ und R^{3'} gleich sind und eine C₁-C₄-Alkylgruppe oder eine C₆-C₁₀-Arylgruppe bedeuten, R⁴ und R^{4'} für Wasserstoff stehen,
R⁵ für 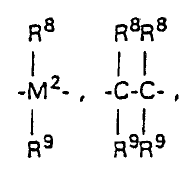 steht, wobei M² Silizium bedeutet, und R⁸ und R⁹ gleich oder verschieden sind und für eine C₁-C₄-Alkylgruppe oder eine C₆-C₁₀-Arylgruppe stehen,
die Reste R¹⁰ und R^{10'} sind gleich und ein gesättiger oder ungesättigter cyclischer C₄-C₉-kohlenstoffhaltiger Rest mit mindestens einem Heteroatom im Ring wie S, N, P sind.

Beispiele für besonders bevorzugte Reste R³ und R^{3'} sind: Methyl, Ethyl, iso-Propyl, iso-Butyl, Butyl und Phenyl.

Beispiele für besonders bevorzugte cyclische C₅-C₃₀-kohlenstoffhaltige Reste sind 2-N-Methyl-indolyl, 4-Pyridyl, 2-Pyridyl, 8-Chinolyl, 3-Chinolyl.

Beispiele für Verbindungen der Formel I sind:
Dimethylsilandiylbis(2-methyl-4-(2-pyridyl)indenyl)zirconium dichloride
Dimethylsilandiylbis(2-ethyl-4-(2-pyridyl)indenyl)zirconium dichloride
Dimethylsilandiylbis(2-n-butyl-4-(2-pyridyl)indenyl)zirconium dichloride
Dimethylsilandiylbis(2-i-propyl-4-(2-pyridyl)indenyl)zirconium dichloride
Dimethylsilandiylbis(2-phenyl-4-(2-pyridyl)indenyl)zirconium dichloride
Dimethylsilandiylbis(2-trimethylsilyl-4-(2-pyridyl)indenyl)zirconium dichloride
Methylphenylsilandiylbis(2-methyl-4-(2-pyridyl)indenyl)zirconium dichloride
Diphenylsilandiylbis(2-methyl-4-(2-pyridyl)indenyl)zirconium dichloride
1,2-Ethandiylbis(2-methyl-4-(2-pyridyl)indenyl)zirconium dichloride

Dimethylsilandiylbis(2-methyl-4-(2-pyridyl)-7-methyl-indenyl)zirconium dichloride
Dimethylsilandiylbis(2-ethyl-4-(2-pyridyl)-7-methyl-indenyl)zirconium dichloride
Dimethylsilandiylbis(2-n-butyl-4-(2-pyridyl)-7-methyl-indenyl)zirconium dichloride
Dimethylsilendiylbis(2-i-propyl-4-(2-pyridyl)-7-methyl-indenyl)zirconium dichloride
Dimethylsilandiylbis(2-phenyl-4-(2-pyridyl)-7-methyl-indenyl)zirconium dichloride
Dimethylsilandiylbis(2-trimethylsilyl-4-(2-pyridyl)-7-methyl-indenyl)zirconium dichloride
Methylphenylsilandiylbis(2-methyl-4-(2-pyridyl)-7-methyl-indenyl)zirconium dichloride
Diphenylsilandiylbis(2-methyl-4-(2-pyridyl)-7-methyl-indenyl)zirconium dichloride
1,2-Ethandiylbis(2-methyl-4-(2-pyridyl)-7-methyl-indenyl)zirconium dichloride

Dimethylsilandiylbis(2-methyl-4-(2-pyridyl)-6-i-propyl-indenyl)zirconium dichloride
Dimethylsilandiylbis(2-ethyl-4-(2-pyridyl)-6-i-propyl-indenyl)zirconium dichloride
Dimethylsilandiylbis(2-n-butyl-4-(2-pyridyl)-6-i-propyl-indenyl)zirconium dichloride
Dimethylsilandiylbis(2-i-propyl-4-(2-pyridyl)-6-i-propyl-indenyl)zirconium dichloride
Dimethylsilandiylbis(2-phenyl-4-(2-pyridyl)-6-i-propyl-indenyl)zirconium dichloride
Dimethylsilandiylbis(2-trimethylsilyl-4-(2-pyridyl)-6-i-propyl-indenyl)zirconium dichloride
Methylphenylsilandiylbis(2-methyl-4-(2-pyridyl)-6-i-propyl-indenyl)zirconium dichloride
Diphenylsilandiylbis(2-methyl-4-(2-pyridyl)-6-i-propyl-indenyl)zirconium dichloride
1,2-Ethandiylbis(2-methyl-4-(2-pyridyl)-6-i-propyl-indenyl)zirconium dichloride

Dimethylsilandiylbis(2-methyl-4,6-bis(2-pyridyl)indenyl)zirconium dichloride
Dimethylsilandiylbis(2-ethyl-4,6-bis(2-pyridyl)indenyl)zirconium dichloride
Dimethylsilandiylbis(2-n-butyl-4,6-bis(2-pyridyl)indenyl)zirconium dichloride
Dimethylsilandiylbis(2-i-propyl-4,6-bis(2-pyridyl)indenyl)zirconium dichloride
Dimethylsilandiylbis(2-phenyl-4,6-bis(2-pyridyl)indenyl)zirconium dichloride
Dimethylsilandiylbis(2-trimethylsilyl-4,6-bis(2-pyridyl)indenyl)zirconium dichloride
Methylphenylsilandiylbis(2-methyl-4,6-bis(2-pyridyl)indenyl)zirconium dichloride
Diphenylsilandiylbis(2-methyl-4,6-bis(2-pyridyl)indenyl)zirconium dichloride
1,2-Ethandiylbis(2-methyl-4,6-bis(2-pyridyl)indenyl)zirconium dichloride

Dimethylsilandiylbis(2-methyl-4-(3-chinolyl)indenyl)zirconium dichloride
Dimethylsilandiylbis(2-ethyl-4-(3-chinolyl)indenyl)zirconium dichloride
Dimethylsilandiylbis(2-n-butyl-4-(3-chinolyl)indenyl)zirconium dichloride
Dimethylsilandiylbis(2-i-propyl-4-(3-chinolyl)indenyl)zirconium dichloride
Dimethylsilandiylbis(2-phenyl-4-(3-chinolyl)indenyl)zirconium dichloride
Dimethylsilandiylbis(2-trimethylsilyl-4-(3-chinolyl)indenyl)zirconium dichloride
Methylphenylsilsndiylbis(2-methyl-4-(3-chinolyl)indenyl)zirconium dichloride
Diphenylsilandiylbis(2-methyl-4-(3-chinolyl)indenyl)zirconium dichloride
1,2-Ethandiylbis(2-methyl-4-(3-chinolyl)indenyl)zirconium dichloride

Dimethylsilandiylbis(2-methyl-4-(8-chinolyl)indenyl)zirconium dichloride
Dimethylsilandiylbis(2-ethyl-4-(8-chinolyl)indenyl)zirconium dichloride
Dimethylsilandiylbis(2-n-butyl-4-(8-chinolyl)indenyl)zirconium dichloride
Dimethylsilandiylbis(2-i-propyl-4-(8-chinolyl)indenyl)zirconium dichloride
Dimethylsilandiylbis(2-phenyl-4-(8-chinolyl)indenyl)zirconium dichloride
Dimethylsilandiylbis(2-trimethylsilyl-4-(8-chinolyl)indenyl)zirconium dichloride
Methylphenylsilandiylbis(2-methyl-4-(8-chinolyl)indenyl)zirconium dichloride
Diphenylsilandiylbis(2-methyl-4-(8-chinolyl)indenyl)zirconium dichloride
1,2-Ethandiylbis(2-methyl-4-(8-chinolyl)indenyl)zirconium dichloride

Dimethylsilandiylbis(2-methyl-4,5-(2-azabenzo)indenyl)zirconium dichloride
Dimethylsilandiylbis(2-ethyl-4,5-(2-azabenzo)indenyl)zirconium dichloride
Dimethylsilandiylbis(2-n-butyl-4,5-(2-azabenzo)indenyl)zirconium dichloride
Dimethylsilandiylbis(2-i-propyl-4,5-(2-azabenzo)indenyl)zirconium dichloride
Dimethylsilandiylbis(2-phenyl-4,5-(2-azabenzo)indenyl)zirconium dichloride
Dimethylsilandiylbis(2-trimethylsilyl-4,5-(2-azabenzo)indenyl)zirconium dichloride
Methylphenylsilandiylbis(2-methyl-4,5-(2-azabenzo)indenyl)zirconium dichloride
Diphenylsilandiylbis(2-methyl-4,5-(2-azabenzo)indenyl)zirconium dichloride
1,2-Ethandiylbis(2-methyl-4,5-(2-azabenzo)indenyl)zirconium dichloride

Dimethylsilandiylbis(2-methyl-4-(4-pyridyl)indenyl)zirconium dichloride
Dimethylsilandiylbis(2-ethyl-4,5-(4-pyridyl)indenyl)zirconium dichloride
Dimethylsilandiylbis(2-n-butyl-4,5-(4-pyridyl)indenyl)zirconium dichloride
Dimethylsilandiylbis(2-i-propyl-4,5-(4-pyridyl)indenyl)zirconium dichloride
Dimethylsilandiylbis(2-phenyl-4,5-(4-pyridyl)indenyl)zirconium dichloride
Dimethylsilandiylbis(2-trimethylsilyl-4,5-(4-pyridyl)indenyl)zirconium dichloride
Methylphenylsilandiylbis(2-methyl-4,5-(4-pyridyl)indenyl)zirconium dichloride
Diphenylsilandiylbis(2-methyl-4,5-(4-pyridyl)indenyl)zirconium dichloride
1,2-Ethandiylbis(2-methyl-4,5-(4-pyridyl)indenyl)zirconium dichloride

Bis(2-methyl-4-(2-pyridyl)indenyl)zirconium dichloride
Dimethylsilandiylbis(4-(2-pyridyl)indenyl)zirconium dichloride
(2-i-propyl-4-(2-pyridyl)indenyl)zirconium dichloride
(2-phenyl-4-(2-pyridyl)indenyl)zirconium dichloride
(2-trimethylsilyl-4-(2-pyridyl)indenyl)zirconium dichloride
Methylphenylsilandiylbis(4-(2-pyridyl)indenyl)zirconium dichloride
Diphenylsilandiylbis(4-(2-pyridyl)indenyl)zirconium dichloride
1,2-Ethandiylbis(4-(2-pyridyl)indenyl)zirconium dichloride

Bis(2-methyl-4-(2-pyridyl)-7-methyl-indenyl)zirconium dichloride
Dimethylsilandiylbis(4-(2-pyridyl)-7-methyl-indenyl)zirconium dichloride
(2-i-propyl-4-(2-pyridyl)-7-methyl-indenyl)zirconium dichloride
(2-phenyl-4-(2-pyridyl)-7-methyl-indenyl)zirconium dichloride
(2-trimethylsilyl-4-(2-pyridyl)-7-methyl-indenyl)zirconium dichloride
Methylphenylsilandiylbis(4-(2-pyridyl)-7-methyl-indenyl)zirconium dichloride
Diphenylsilandiylbis(4-(2-pyridyl)-7-methyl-indenyl)zirconium dichloride
1,2-Ethandiylbis(4-(2-pyridyl)-7-methyl-indenyl)zirconium dichloride

Dimethylsilandiylbis(2-methyl-4-(2-pyridyl)-6-i-propyl-indenyl)hafnium dichloride
Dimethylsilandiylbis(4-(2-pyridyl)-6-i-propyl-indenyl)hafnium dichloride
Dimethylsilandiylbis(2-n-butyl-4-(2-pyridyl)-6-i-propyl-indenyl)hafnium dichloride
Bis(2-i-propyl-4-(2-pyridyl)-6-i-propyl-indenyl)hafnium dichloride
Dimethylsilandiylbis(2-phenyl-4-(2-pyridyl)-6-i-propyl-indenyl)hafnium dichloride
Dimethylsilandiylbis(2-trimethylsilyl-4-(2-pyridyl)-6-i-propyl-indenyl)hafnium dichloride
Methylphenylsilandiylbis(2-methyl-4-(2-pyridyl)-6-i-propyl-indenyl)hafnium dichloride
Diphenylsilandiylbis(2-methyl-4-(2-pyridyl)-6-i-propyl-indenyl)hafnium dichloride
1,2-Ethandiylbis(2-methyl-4-(2-pyridyl)-6-i-propyl-indenyl)hafnium dichloride

Dimethylsilandiyl(indenyl)(2-methyl-4-(3-chinolyl)indenyl)zirconium dichloride
Dimethylsilandiyl(indenyl)(2-ethyl-4-(3-chinolyl)indenyl)zirconium dichloride
Dimethylsilandiyl(indenyl)(2-n-butyl-4-(3-chinolyl)indenyl)zirconium dichloride
Dimethylsilandiyl(indenyl)(2-i-propyl-4-(3-chinolyl)indenyl)zirconium dichloride
Dimethylsilandiyllindenyl)(2-phenyl-4-(3-chinolyl)indenyl)zirconium dichloride
Dimethylsilandiyl(indenyl)(2-trimethylsilyl-4-(3-chinolyl)indenyl)zirconium dichloride
Mathylphanylsilandiyl(indenyl)(2-methyl-4-(3-chinolyl)indenyl)zirconium dichloride
Diphenylsilandiyl(indenyl)(2-methyl-4-(3-chinolyl)indenyl)zirconium dichloride
1,2-Ethandiyl(indenyl)(2-methyl-4-(3-chinolyl)indenyl)zirconium dichloride

Dimethylsilandiyl(2-methyl-indenyl)(2-methyl-4-(8-chinolyl)indenyl)zirconium dichloride
Dimethylsilandiyl(2-methyl-indenyl)(2-ethyl-4-(8-chinolyl)indenyl)zirconium dichloride
Dimethylsilandiyl(2-methyl-indenyl)(2-n-butyl-4-(8-chinolyl)indenyl)zirconium dichloride
Dimethylsilandiyl(2-methyl-indenyl)(2-i-propyl-4-(8-chinolyl)indenyl)zirconium dichloride
Dimethylsilandiyl(2-methyl-indenyl)(2-phenyl-4-(8-chinolyl)indenyl)zirconium dichloride
Dimethylsilandiyl(2-methyl-indenyl)(2-trimethylsilyl-4-(8-chinolyl)indenyl)zirconium dichloride
Methylphenylsilandiyl(2-methyl-indenyl)(2-methyl-4-(8-chinolyl)indenyl)zirconium dichloride
Diphenylsilandiyl(2-methyl-indenyl)(2-methyl-4-(8-chinolyl)indenyl)zirconium dichloride
1,2-Ethandiyl(2-methyl-indenyl)(2-methyl-4-(8-chinolyl)indenyl)zirconium dichloride

Bis(2-methyl-4,5-(2-azabenzo)indenyl)zirconium dichloride
Dimethylsilandiylbis(4,5-(2-azabenzo)indenyl)zirconium dichloride
Dimethylsilandiylbis(2-n-butyl-4,5-(2-azabenzo)indenyl)hafnium dichloride
Bis(2-i-propyl-4,5-(2-azabenzo)indenyl)zirconium dichloride
Bis(2-phenyl-4,5-(2-azabenzo)indenyl)zirconium dichloride
Bis(2-trimethylsilyl-4,5-(2-azabenzo)indenyl)zirconium dichloride
Methylphenylsilandiylbis(4,5-(2-azabenzo)indenyl)zirconium dichloride
Diphenylsilandiylbis(4,5-(2-azabenzo)indenyl)zirconium dichloride
1,2-Ethandiylbis(4,5-(2-azabenzo)indenyl)zirconium dichloride

Dimethylsilandiyl(2-methyl-4-phenyl-indenyl)(2-methyl-4-(4-pyridyl)indenyl)zirconium dichloride
Dimethylsilandiy((2-methy(-4-phenyl-indenyl)(2-ethyl-4,5-(4-pyridyl)indenyl)zirconium dichloride
Dimethylsilandiyl(2-methyl-4-phenyl-indenyl)(2-n-butyl-4,5-(4-pyridyl)indenyl)zirconium dichloride
Dimethylsilandiyl(2-methyl-4-phenyl-indenyl)(2-i-propyl-4,5-(4-pyridyl)indenyl)zirconium dichloride
Dimethylsilandiyl(2-methyl-4-phenyl-indenyl)(2-phenyl-4,5-(4-pyridyl)indenyl)zirconium dichloride

Dimethylsilandiyl(2-methyl-4-phenyl-indenyl)(2-trimethylsilyl-4,5-(4-pyridyl)indenyl)zirconium dichloride
Methylphenylsilandiyl(2-methyl-4-phenyl-indenyl)(2-methyl-4,5-(4-pyridyl)indenyl)zirconium dichloride
Diphenylsilandiyl(2-methyl-4-phenyl-indenyl)(2-methyl-4,5-(4-pyridyl)indenyl)zirconium dichloride
1,2-Ethandiyl(2-methyl-4-phenyl-indenyl)(2-methyl-4,5-(4-pyridyl)indenyl)zirconium dichloride

Dimethylsilandiyl(methylcyclopentadienyl)(2-methyl-4,6-bis(2-pyridyl)indenyl)zirconium dichloride
Dimethylsilandiyl(methylcyclopentadienyl)(2-ethyl-4,6-bis(2-pyridyl)indenyl)zirconium dichloride
Dimethylsilandiyl(methylcyclopentadienyl)(2-n-butyl-4,6-bis(2-pyridyl)indenyl)zirconium dichloride
Dimethylsilandiyl(methylcyclopentadienyl)(2-i-propyl-4,6-bis(2-pyridyl)indenyl)zirconium dichloride
Dimethylsilandiyl(methylcyclopentadienyl)(2-phenyl-4,6-bis(2-pyridyl)indenyl)zirconium dichloride

Dimethylsilandiyl(methylcyclopentadienyl)(2-trimethylsilyl-4,6-bis(2-pyridyl)indenyl)zirconium dichloride
Methylphenylsilandiyl(methylcyclopentadienyl)(2-methyl-4,6-bis(2-pyridyl)indenyl)zirconium- dichloride
Diphenylsilandiyl(methylcyclopentadienyl)(2-methyl-4,6-bis(2-pyridyl)indenyl)zirconium dichloride
1,2-Ethandiyl(methylcyclopentadienyl)(2-methyl-4,6-bis(2-pyridyl)indenyl)zirconium dichloride

Dimethylsilandiyl(fluorenyl)(2-methyl-4-(3-chinolyl)indenyl)zirconium dichloride
Dimethylsilandiyl(fluorenyl)(2-ethyl-4-(3-chinolyl)indenyl)zirconium dichloride
Dimethylsilandiyl(fluorenyl)(2-n-butyl-4-(3-chinolyl)indenyl)zirconium dichloride
Dimethylsilandiyl(fluorenyl)(2-i-propyl-4-(3-chinolyl)indenyl)zirconium dichloride
Dimethylsilandiyl(fluorenyl)(2-phenyl-4-(3-chinolyl)indenyl)zirconium dichloride
Dimethylsilandiyl(fluorenyl)(2-trimethylsilyl-4-(3-chinolyl)indenyl)zirconium dichloride
Methylphenylsilandiyl(fluorenyl)(2-methyl-4-(3-chinolyl)indenyl)zirconium dichloride
Diphenylsilandiyl(fluorenyl)(2-methyl-4-(3-chinolyl)indenyl)zirconium dichloride
1,2-Ethandiyl(fluorenyl)(2-methyl-4-(3-chinolyl)indenyl)zirconium dichloride

Dimethylsilandiylbis(2-methyl-6-(8-chinolyl)indenyl)zirconium dichloride
Dimethylsilandiylbis(2-ethyl-6-(8-chinolyl)indenyl)zirconium dichloride
Dimethylsilandiylbis(2-n-butyl-6-(8-chinolyl)indenyl)zirconium dichloride
Dimethylsilandiylbis(2-i-propyl-6-(8-chinolyl)indenyl)zirconium dichloride
Dimethylsilandiylbis(2-phenyl-6-(8-chinolyl)indenyl)zirconium dichloride
Dimethylsilandiylbis(2-trimethylsilyl-6-(8-chinolyl)indenyl)zirconium dichloride
Methylphenylsilandiylbis(2-methyl-6-(8-chinolyl)indenyl)zirconium dichloride
Diphenylsilandiylbis(2-methyl-6-(8-chinolyl)indenyl)zirconium dichloride
1,2-Ethandiylbis(2-methyl-6-(8-chinolyl)indenyl)zirconium dichloride

Dimethylsilandiyl(methylcyclopentadienyl)(2-methyl-4,5-(2-azabenzo)indenyl)zirconium dichloride
Dimethylsilandiyl(methylcyclopentadienyl)(2-ethyl-4,5-(2-azsbenzo)indenyl)zirconium dichloride
Dimethylsilandiyl(methylcyclopentadienyl)(2-n-butyl-4,5-(2-azabenzo)indenyl)zirconium dichloride
Dimethylsilandiyl(methylcyclopentadienyl)(2-i-propyl-4,5-(2-azabenzo)indenyl)zirconium dichloride
Dimethylsilandiyl(methylcyclopentadienyl)(2-phenyl-4,5-(2-azabenzo)indenyl)zirconium dichloride
Dimethylsilandiyl(methylcyclopentadienyl)(2-trimethylsilyl-4,5-(2-azabenzo)indenyl)zirconium dichloride
Methylphenylsilandiyl(methylcyclopentadienyl)(2-methyl-4,5-(2-azabenzo)indenyl)zirconium dichloride
Diphenylsilandiyl(methylcyclopentadienyl)(2-methyl-4,5-(2-azabenzo)indenyl)zirconium dichloride
1,2-Ethandiyl(methylcyclopentadienyl)(2-methyl-4,5-(2-azabenzo)indenyl)zirconium dichloride

Dimethylsilandiylbis((4-pyridyl)cyclopentadienyl)zirconium dichloride
Dimethylsilandiylbis(ethyl-(4-pyridyl)cyclopentadienyl)zirconium dichloride
Dimethylsilandiylbis(n-butyl-(4-pyridyl)cyclopentadienyl)zirconium dichloride
Dimethylsilandiylbis(i-propyl-(4-pyridyl)cyclopentadienyl)zirconium dichloride
Dimethylsilandiylbis(phenyl-(4-pyridyl)cyclopentadienyl)zirconium dichloride
Dimethylsilandiylbis(trimethylsilyl-(4-pyridyl)cyclopentadienyl)zirconium dichloride
Methylphenylsilandiylbls(methyl-(4-pyridyl)cyclopentadienyl)zirconium dichloride
Diphenylsilandiylbis((4-pyridyl)cyclopentadienyl)zirconium dichloride
1,2-Ethandiylbis((4-pyridyl)cyclopentadienyl)zirconium dichloride

Die Herstellung der Metallocene der Formel I erfolgt nach literaturbekannten Verfahren (Chem. Lett., 1991, 11, S. 2047 ff.).

Verbrückte Metallocene der Formel II können z.B. nach folgendem Reaktionsschema hergestellt werden:

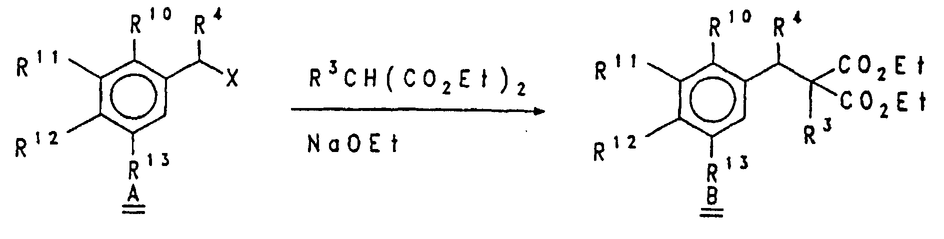

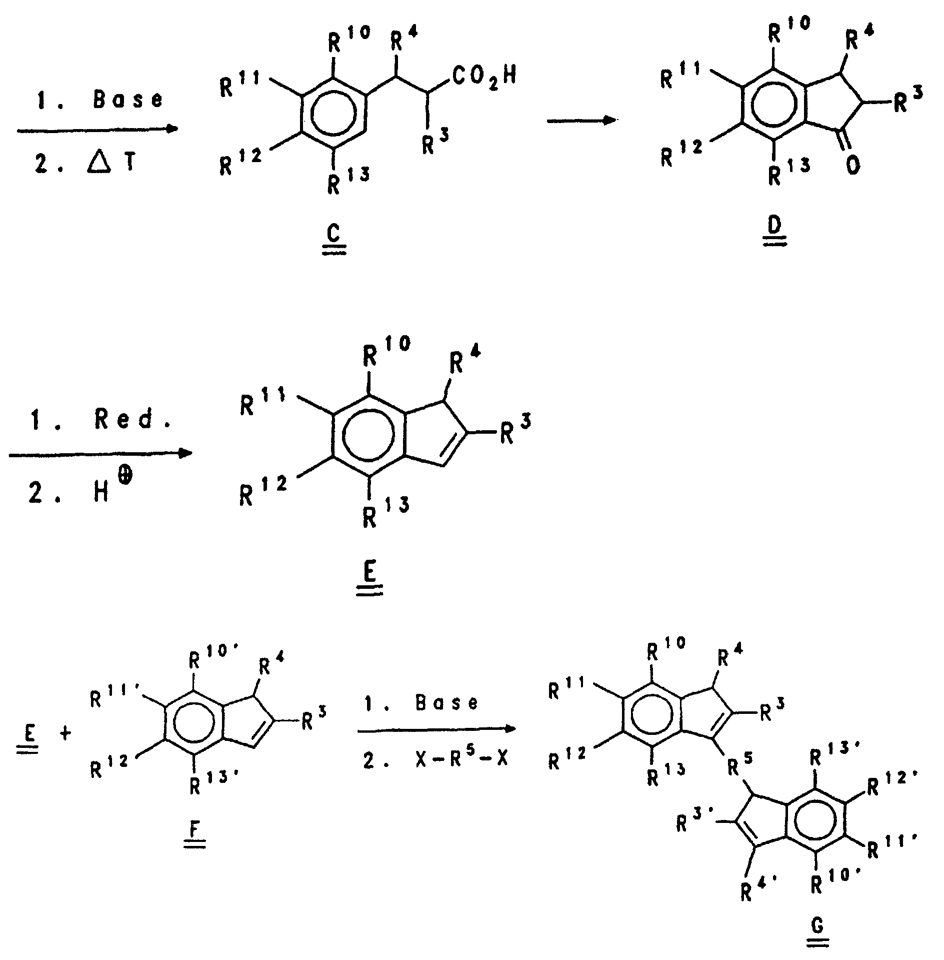

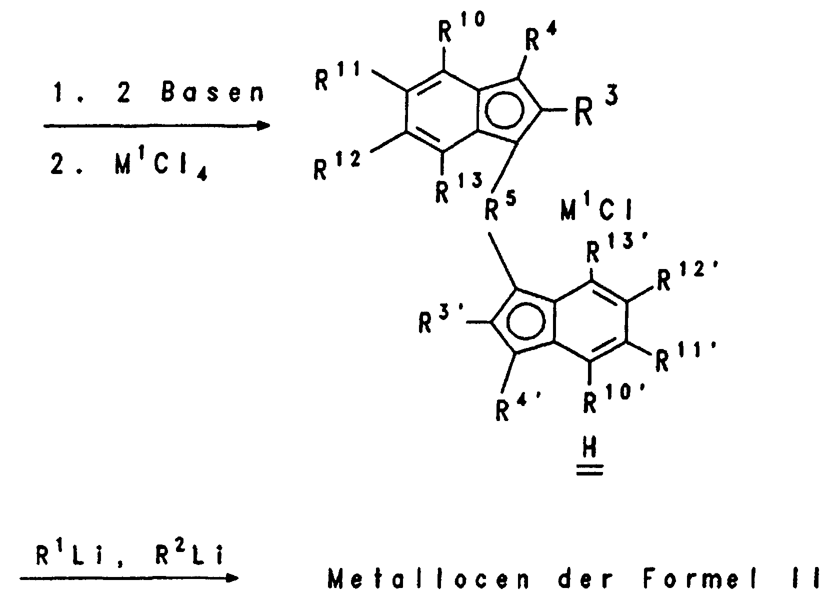

Die Benzylhalogenidderivate der Formel A sind im Handel erhältlich oder können nach literaturbekannten Methoden hergestellt werden.

Die Umsetzung zu den Verbindungen der Formel B erfolgt durch Reaktion mit substituierten Malonsäureestern unter basischen Bedingungen, wie beispielsweise in ethanolischen Lösungen von Natriumethanolat.

Die Verbindungen der Formel B werden mit Alkalihydroxiden wie Kaliumhydroxid oder Natriumhydroxid verseift und durch Behandeln der entstandenen Dicarbonsäuren mit Wärme zu den Verbindungen der Formel C decarboxyliert.

Der Ringschluß zu den entsprechenden Indanonen der Formei D erfolgt durch Umsetzung mit Chlorierungsreagentien wie beispielsweise SOCl₂ zu den entsprechenden Säurechloriden und anschließender Cyclisierung mit einem Friedel-Crafts-Katalysator in einem inerten Solvent, wie z.B. AlCl₃ oder Polyphosphorsäure in Methylenchlorid oder CS₂.

Die Umsetzung zu den Indenderivaten der Formel E erfolgt durch Reduktion mit einem hydridübertragenden Reagenz, wie beispielsweise Natriumborhydrid oder Lithiumaluminiumhydrid oder Wasserstoff und einem entsprechenden Katalysator in einem inerten Lösungsmittel wie beispielsweise Diethylether oder Tetrahydrofuran zu den entsprechenden Alkoholen und Dehydratisierung der Alkohole unter sauren Bedingungen, wie beispielsaweise p-Toluolsulfonsäure oder einer wässrigen Mineralsäure oder durch Umsetzung mit wasserentziehenden Substanzen wie Magnesiumsulfat, wasserfreiem Kupfersulfat oder Molekularsiebe.

Die Herstellung der Ligandsysteme der Formel G und die Umsetzung zu den verbrückten chiralen Metallocenen der Formel H sowie die Isolierung der gewünschten racemischen Form ist im Prinzip bekannt. Hierzu wird das Indenderivat der Formel E mit einer starken Base wie beispielsweise Butyllithium oder Kaliumhydrid in einem inerten Lösungsmittel deprotoniert und mit einem Reagenz der Formel F zu dem Ligandsystem der Formel G umgesetzt. Dieses wird anschließend mit zwei Äquivalenten einer starken Base wie beispielsweise Butyllithium oder Kaliumhydrid in einem inerten Lösungsmittel deprotoniert und mit dem entsprechenden Metalltetrahalogenid wie beispielsweise Zirkoniumtetrachlorid in einem geeigneten Lösemittel umgesetzt. Geeignete Lösemittel sind aliphatische oder aromatische Lösemittel, wie beispielsweise Hexan oder Toluol, etherische Lösemittel, wie beispielsweise Tetrahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol. Die Trennung der racemischen und der meso-Form erfolgt durch Extraktion oder Umkristallisation mit geeigneten Lösemitteln.

Metallocene der Formel I kann auch durch die direkte Umsetzung des Ligandsystems der Formel G mit einem Reagenz der Formel M¹(NR⁶₂)₄ erfolgen, wobei es möglich ist die Bildung der racemischen und der meso-Form zu beeinflussen (Organometallisc, 1995, 14, 5-7).

Die Derivatisierung zu den Metallocenen der Formel II kann beispielsweise durch Umsetzung mit Alkylierungsmitteln wie Methyllithium erfolgen.

Die vorliegende Erfindung betrifft auch ein Verfahren zur Herstellung eines Polyolefins durch Polymerisation mindestens eines Olefins in Gegenwart eines Katalysators, welcher mindestens eine Metallocenverbindung und mindestens einen Cokatalysator enthält, dadurch gekennzeichnet, daß das Metallocen eine Verbindung der Formel I, bevorzugt der Formel II, ist. Unter dem Begriff Polymerisation wird eine Homopolymerisation wie auch eine Copolymerisation verstanden.

Bevorzugt werden Olefine der Formel R^{a}-CH=CH-R^{b} homo- oder copolymerisiert, worin R^{a} und R^{b} gleich oder verschieden sind und ein Wasserstoffatom oder einen Kohlenwasserstoffrest mit 1 bis 20 C-Atomen, insbesondre 1 bis 10 C-Atome, bedeuten, oder R^{a} und R^{b} zusammen mit den sie verbindenden Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen. Bevorzugt werden in dem erfindungsgemäßen Verfahren Ethylen oder Propylen homopolymerisiert, oder Ethylen mit einem oder mehreren 1-Olefinen mit 3 bis 20 C-Atomen, wie Propylen, und/oder einem oder mehreren Dienen mit 4 bis 20 C-Atomen, wie 1,4-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßen Verfahren eingesetzte Katalysator eine Metallocenverbindung der Formel I. Es können auch Mischungen zweier oder mehrerer Metallocenverbindungen der Formel I, oder Mischungen von Metallocenverbindungen der Formel I mit anderen Metallocenen, Halbsandwichverbindungen eingesetzt werden, z.B. zur Herstellung von Polyolefinen mit breiter oder multimodaler Molmassenverteilung.

Die chiralen Metallocene der Formel I werden bevorzugt als Racemat eingesetzt. Verwendet werden kann aber auch das reine Enantiomere in der (+)- oder (-)-Form. Mit den reinen Enantiomeren ist ein optisch aktives Polymer herstellbar. Abgetrennt werden sollte jedoch die meso-Form der Metallocene, da das polymerisationsaktive Zentrum (das Metallatom) in diesen Verbindungen wegen der Spiegelsymmetrie am Zentralmetallatom nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen, beispielsweise weiche Formkörper, kann dies durchaus wünschenswert sein.

Erfindungsgemäß wird mindestens ein Cokatalysator eingesetzt, der bevorzugt eine Aluminiumverbindung und/oder eine Borverbindung ist. Bevorzugt ist als Aluminiumverbindung ein Aluminoxan, insbesondere der Formel IIa für den linearen Typ und/oder der Formel IIb für den cyclischen Typ 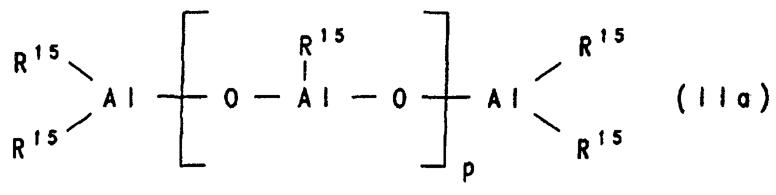 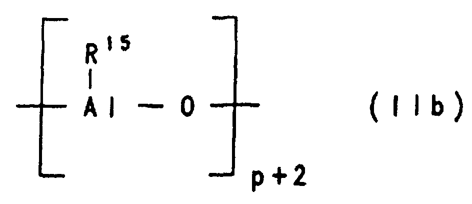 wobei in den Formeln IIa und IIb die Reste R¹⁵ gleich oder verschieden sein können und Wasserstoff oder eine C₁-C₂₀-Kohlenwasserstoffgruppe wie eine C₁-C₆- Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R¹⁵ gleich und bedeuten Methyl, Isobutyl, Phenyl oder Benzyl, besonders bevorzugt Methyl.

Sind die Reste R¹⁵ verschieden, so sind sie bevorzugt Methyl und Wasserstoff oder alternativ Methyl und Isobutyl, wobei Wasserstoff oder Isobutyl bevorzugt zu 0,01 bis 40% (Zahl der Reste R¹⁵) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R¹⁵ werden beispielsweise entsprechend der gewünschten Zusammensetzung zwei verschiedene Aluminiumtrialkyle mit Wasser umgesetzt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit dem Cokatalysator, z.B. einem Aluminoxan vorzuaktivieren. Dadurch wird die Polymerisationsaktivität deutlich erhöht und die Kornmorphologie verbessert. Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierung beträgt 5 Minuten bis 60 Stunden, vorzugsweise 5 bis 60 Minuten. Man arbeitet bei einer Temperatur von -78 bis 100°C, vorzugsweise 0 bis 70°C.

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form.

Vorzugsweise wird der Cokatalysator, d.h. die aluminiumorganische Verbindung, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 92 107 331.8 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 dm³ Volumen werden 5 dm³ Decan unter Inertbedingungen vorgelegt. 0,5 dm³ (= 5.2 mol) Trimethylaluminium werden bei 25°C zugefügt. Danach werden 250 g Kieselgel SD 3216-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 Stunden jeweils alle 15 Sekunden in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 Stunden bei 25°C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro cm³ Suspension. Der isolierte Feststoff enthält 31 Gew.-% Aluminium, das Suspensionsmittel enthält 0,1 Gew.-% Aluminium.

Weitere Möglichkeiten der Herstellung eines geträgerten Cokatalysators sind in EP 92 107331.8 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis +120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.

Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5- mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Erfindungsgemäß können auch Borverbindungen, insbesondere der Formeln R¹⁶ₓNH₄₋ₓBR¹⁷₄, R¹⁶ₓPH₄₋ₓBR¹⁷₄, R¹⁶₃CBR¹⁷₄, BR¹⁷₃ als Cokatalysatoren verwendet werden. In diesen Formeln bedeutet x eine Zahl von 1 bis 4, bevorzugt 3, die Reste R¹⁶ sind gleich oder verschieden, bevorzugt gleich, und bedeuten C₁-C₁₀-Alkyl, C₆-C₁₈-Aryl oder 2 Reste R¹⁶ bilden zusammen mit dem sie verbindenden Atom einen Ring, und die Reste R¹⁷ sind gleich oder verschieden, bevorzugt gleich, und stehen für C₆-C₁₈-Aryl, das durch Alkyl, Haloalkyl oder Fluor substituiert sein kann.
Insbesondere steht R¹⁶ für Ethyl, Propyl, Butyl oder Phenyl und R¹⁷ für Phenyl, Pentafluorphenyl, 3,5-Bistrifluormethylphenyl, Mesityl, Xylyl oder Tolyl (vgl. EP 277 003, EP 277 004 und EP 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösemittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator oder das aus ihm gebildete Anion keine weiteren Reaktionen mit dem gebildeten Metallocenkation eingehen (vgl. EP 427 697).

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Als Molmassenregler und/oder zur Steigerung der Aktivität wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Vor der Zugabe des Katalysators, insbesondere des geträgerten Katalysatorsystems (aus einem erfindungsgemäßen Metallocen und einem geträgerten Cokatalysator beziehungsweise aus einem erfindungsgemäßen Metallocen und einer aluminiumorganischen Verbindung auf einem Polyolefinpulver in feinverteilter Form), kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin, Scavenger) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Die nachfolgenden Beispiele sollen die Erfindung näher erläutern.

Alle Glasgeräte wurden im Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon jeweils frisch über Na/K-Legierung destilliert und in Schlenk-Gefäßen aufbewahrt.

Die Ermittlung des Al/CH₃-Verhältnisses im Aluminoxan erfolgte durch Zersetzung der Probe mit H₂SO₄ und Bestimmung des Volumens der entstehenden Hydrolysegase unter Normalbedingungen sowie durch komplexometrische Titration des Aluminiums in der dann gelösten Probe nach Schwarzenbach.

Toluol lösliches Methylaluminoxan wurde für die Beispiele zur Suspensionspolymerisation und zur Massepolymerisation mit ungeträgertem Metallocen als 10 Gew.-%ige Toluol-Lösung eingesetzt und enthielt gemäß Aluminium-Bestimmung 36 mg Al/cm³. Der mittlere Oligomerisationsgrad gemäß Gefrierpunktserniedrigung in Benzol betrug n = 20. Für das Toluol lösliche Methylalumoxan wurde ein Verhältnis Al : CH₃ = 1 : 1,55 ermittelt.

Es bedeuten:
- VZ =: Viskositätszahl in cm³/g
- M_{w} =: Molmassengewichtsmittel in g/mol (ermittelt durch Gelpermeationschromatographie)
- M_{w}/Mₙ =: Molmassendispersität
- Schmp. =: Schmelzpunkt in °C (ermittelt mit DSC, 20°C/min Aufheiz-/Abkühlgeschwindigkeit)
- II =: Isotaktischer Index (II = mm + 1/2 mr, ermittelt durch ¹³C-NMR-Spektroskopie)
- MFI 230/5 =: Schmelzindex, gemessen nach DIN 53735; in dg/min
- SD =: Polymerschüttdichte in g/dm³.

### A. Dimethylsilandiylbis(2-methyl-4-(2-pyridyl)indenyl)zirkoniumdichlorid (1)

### 1. 2-(2-(2-Pyridyl)benzyl)-propionsäure

Zu 19,5 g (0,85 mol) Natrium in 400 cm³ H₂O-freiem EtOH wurden bei Raumtemperatur 148 g (0,85 mol) Methyl-malonsäurediethylester zugetropft. Anschließend wurden 211 g (0,85 mol) 2-(2-Pyridyl)benzylbromid zugetropft und 3 Stunden zum Rückfluß erhitzt. Bei Raumtemperatur wurden 143 g (2,55 mol) KOH gelöst in 500 cm³ H₂O zugesetzt und weitere 4 Stunden zum Rückfluß erhitzt. Das EtOH wurde abdestilliert und der Rückstand bis zur vollständigen Lösung mit H₂O versetzt und anschließend mit konzentrierter wässr. HCI bis pH 1 angesäuert. Der ausgefallene Niederschlag wurde abgesaugt, getrocknet und 1 Stunde auf 130°C erhitzt. Man erhielt 193 g (94 %) 2-(2-(2-Pyridyl)benzyl)-propionsäure als Feststoff.

### 2. 2-Methyl-4-(2-pyridyl)-1-indanon

Eine Lösung von 193 g (0,80 mol) 2-(2-(2-Pyridyl)benzyl)-propionsäure in 81 cm³ (1,2 mol) Thionylchlorid wurde 18 Stunden bei Raumtemperatur gerührt. Überschüssiges Thionylchlorid wurde bei 10 mbar entfernt und das Säurechlorid in 400 cm³ Toluol aufgenommen. Die Lösung wurde bei 10°C zu einer Suspension von 113 g (0,85 mol) AlCl₃ in 1500 cm³ Toluol getropft und 1 Stunde auf 80°C erhitzt. Die Reaktionsmischung wurde auf 2000 g Eis gegossen und mit konz. wässr. HCl bis pH 1 angesäuert. Die organische Phase wurde abgetrennt und die wässr. Phase 3mal mit je 200 cm³ Et₂O nachextrahiert. Die vereinigten organischen Phasen wurden mit gesättigter wässr. NaHCO₃-, gesättigter wässr. NaCl-Lösung gewaschen und anschließend getrocknet (MgSO₄). Es wurden 132 g (74 %) 2-Methyl-4-(2-pyridyl)-1-indanon erhalten, das ohne weitere Reinigung weiter umgesetzt wurde.

### 3. 2-Methyl-7-(2-pyridyl)inden

Zu einer Lösung von 132 g (0,59 mol) 2-Methyl-4-(2-pyridyl)-1-indanon in 1000 cm³ THF/Methanol 2:1 wurde bei 0°C portionsweise mit 24,6 g (0,65 mol) NaBH₄ versetzt und 18 Stunden bei Raumtemperatur gerührt. Die Reaktionsmischung wurde auf 1000 g Eis gegossen, mit konz. wässr. HCI bis pH 1 versetzt und mehrmals mit Et₂O extrahiert. Die vereinigten organischen Phasen wurden mit gesättigter wässr. NaHCO₃-, gesättigter wässr. NaCI-Lösung gewaschen. Das Lösemittel wurde im Vakuum entfernt und das Rohprodukt in 1000 cm³ Toluol aufgenommen, mit 4,5 g p-Toluolsulfonsäure versetzt und 2 Stunden am Wasserabscheider zum Rückfluß erhitzt. Die Reaktionsmischung wurde 3mal mit 250 cm³ gesättigter wässr. NaHCO₃-Lösung gewaschen und das Lösemittel im Vakuum entfernt. Nach Destillation bei 0,1 mbar wurden bei 145°C 84 g (69 %) 2-Methyl-7-(2-pyridyl)inden als farbloses Öl erhalten.

### 4. Dimethylbis(2-methyl-4-(2-pyridyl)indenyl)silan

Eine Lösung von 25 g (120 mmol) 2-Methyl-7-(2-pyridyl)inden in 250 cm³ H₂O- und O₂-freiem Toluol und 25 ml H₂O- und O₂-freiem THF wurden bei Raumtempertaur mit 45 cm³ (120 mmol) einer 20%igen Lösung von Butyllithium in Toluol versetzt und 2 Stunden auf 80°C erhitzt. Anschließend wurde die gelbe Suspension auf 0°C gekühlt und mit 7,7 g (60 mmol) Dimethyldichlorsilan versetzt. Die Reaktionsmischung wurde noch 1 Stunde auf 80°C erhitzt und anschließend mit 200 cm³ H₂O gewaschen. Das Lösemittel wurde im Vakuum entfernt und der Rückstand durch Kristallisation (Hexan) gereinigt. Es wurden 14,9 g (53 %) Dimethylbis(2-methyl-4-(2-pyridyl)indenyl)silan als farbloser Feststoff erhalten.

### 5. Dimethylsilandiylbis(2-methyl-4-(2-pyridyl)indenyl)zirkoniumdichlorid (1)

Eine Lösung von 5 g (10,6 mmol) Dimethylbis(2-methyl-4-(2-pyridyl)indenyl)silan in 50 cm³ H₂O- und O₂-freiem Et₂O wurden unter Argon bei Raumtemperatur mit 8 cm³ einer 20%igen Lösung von Butyllithium in Toluol versetzt und anschließend 3 Stunden zum Rückfluß erhitzt. Das Lösemittel wurde im Vakuum entfernt und der Rückstand mit 50 ml H₂O- und O₂-freiem Hexan über eine G3-Schlenkfritte filtriert, mit 50 ml H₂O- und O₂-freiem Hexan nachgewaschen und getrocknet (0,1 mbar, RT). Der Feststoff wurde bei -78°C zu einer Suspension von 2,3 g (10 mmol) Zirkoniumtetrachlorid in 50 cm³ Methylenchlorid gegeben und im Verlauf von 18 Stunden unter magn. Rühren auf Raumtemperatur erwärmt. Der Ansatz wurde über eine G3-Fritte filtriert und der Rückstand portionsweise mit insgesamt 100 cm³ Methylenchlorid nachextrahiert. Die vereinigten Filtrate wurden im Vakuum vom Lösemittel befreit und erneut aus Methylenchlorid umkristallisiert. Es wurden 1,7 g (25 %) der racemischen und der meso-Form im Verhältnis 1:1 erhalten. Durch erneutes Umkristallisieren aus Toluol wurde der racemische Komplex Dimethylsilandiylbis(2-methyl-4-(2-pyridyl)-indenyl)zirkoniumdichlorid (1) in Form gelber Kristalle erhalten.

¹H-NMR (100 MHz, CDCl₃): 7,0 - 8,3 (m, 14 H, arom. H), 6,8 (s, 2H, H-C(3)), 2,2 (s, 6H, CH₃), 1,1 (s, 6H, CH₃Si). Massenspektrum: 630 M⁺, korrektes Zerfallsmuster.

### B. Dimethylsilandiylbis(2-methyl-4-(3-chinolyl)indenyl)zirkoniumdichlorid (2)

### 6. 2-(2-(3-Chinolyl)benzyl)-propionsäure

Zu 13,8 g (0,6 mol) Natrium in 300 cm³ H₂O-freiem EtOH wurden bei Raumtemperatur 104 g (0,6 mol) Methyl-malonsäurediethylester zugetropft. Anschließend wurden 178 g (0,6 mol) 2-(3-Chinolyl)benzylbromid zugetropft und 3 Stunden zum Rückfluß erhitzt. Bei Raumtemperatur wurden 100 g (1,8 mol) KOH gelöst in 400 cm³ H₂O zugesetzt und weitere 4 Stunden zum Rückfluß erhitzt. Das EtOH wurde abdestilliert und der Rückstand bis zur vollständigen Lösung mit H₂O versetzt und anschließend mit konzentrierter wässr. HCI bis pH 1 angesäuert. Der ausgefallene Niederschlag wurde abgesaugt, getrocknet und 1 Stunde auf 130°C erhitzt. Man erhielt 145 g (83 %) 2-(2-(3-Chinolyl)benzyl)propionsäure als Feststoff.

### 7. 2-Methyl-4-(3-chinolyl)-1-indanon

Eine Lösung von 145 g (0,5 mol) 2-(2-(3-Chinolyl)benzyl)-propionsäure in 119 g (1,0 mol) Thionylchlorid wurde 18 Stunden bei Raumtemperatur gerührt. Überschüssiges Thionylchlorid wurde bei 10 mbar entfernt und das Säurechlorid in 400 cm³ Toluol aufgenommen. Die Lösung wurde bei 10°C zu einer Suspension von 73 g (0,55 mol) AlCl₃ in 1000 cm³ Toluol getropft und 1 Stunde auf 80°C erhitzt. Die Reaktionsmischung wurde auf 1000 g Eis gegossen und mit konz. wässr. HCI bis pH 1 angesäuert. Die organische Phase wurde abgetrennt und die wässr. Phase 3mal mit je 200 cm³ Et₂O nachextrahiert. Die vereinigten organischen Phasen wurden mit gesättigter wässr. NaHCO₃-, gesättigter wässr. NaCI-Lösung gewaschen und anschließend getrocknet (MgSO₄). Es wurden 64 g (47 %) 2-Methyl-4-(3-chinolyl)-1-indanon erhalten, das ohne weitere Reinigung weiter umgesetzt wurde.

### 8. 2-Methyl-7-(3-chinolyl)inden

Zu einer Lösung von 64 g (0,23 mol) 2-Methyl-4-(3-chinolyl)-1-indanon in 600 cm³ THF/Methanol 2:1 wurde bei 0°C portionsweise mit 11,3 g (0,3 mol) NaBH₄ versetzt und 18 Stunden bei Raumtemperatur gerührt. Die Reaktionsmischung wurde auf 1000 g Eis gegossen, mit konz. wässr. HCI bis pH 1 versetzt und mehrmals mit Et₂O extrahiert. Die vereinigten organischen Phasen wurden mit gesättigter wässr. NaHCO₃-, gesättigter wässr. NaCl-Lösung gewaschen. Das Lösemittel wurde im Vakuum entfernt und das Rohprodukt in 1000 cm³ Toluol aufgenommen, mit 2 g p-Toluolsulfonsäure versetzt und 2 Stunden am Wasserabscheider zum Rückfluß erhitzt. Die Reaktionsmischung wurde 3mal mit 150 cm³ gesättigter wässr. NaHCO₃-Lösung gewaschen und das Lösemittel im Vakuum entfernt. Nach Chromatographie an Kieselgel (Hexan/Essigester 20:1) wurden 45 g (76 %) 2-Methyl-7-(3-chinolyl)inden als farbloses Öl erhalten.

### 9. Dimethylbis(2-methyl-4-(3-chinolyl)indenyl)silan

Eine Lösung von 45 g (174 mmol) 2-Methyl-7-(3-chinolyl)inden in 450 cm³ H₂O- und O₂-freiem Toluol und 45 ml H2O- und O₂-freiem THF wurden bei Raumtempertaur mit 65 cm³ (174 mmol) einer 20%igen Lösung von Butyllithium in Toluol versetzt und 2 Stunden auf 80°C erhitzt. Anschließend wurde die gelbe Suspension auf 0°C gekühlt und mit 11,2 g (87 mmol) Dimethyldichlorsilan versetzt. Die Reaktionsmischung wurde noch 1 Stunde auf 80°C erhitzt und anschließend mit 400 cm³ H₂O gewaschen. Das Lösemittel wurde im Vakuum entfernt und der Rückstand durch Kristallisation (Hexan/Diethylether) gereinigt. Es wurden 24 g (49 %)
Dimethylbis(2-methyl-4-(3-chinolyl)indenyl)silan als farbloser Feststoff erhalten. 10. Dimethylsilandiylbis(2-methyl-4-(3-chinolyl)indenyl)zirkoniumdichlorid (2) Eine Lösung von 10 g (17 mmol) Dimethylbis(2-methyl-4-(3-chinolyl)indenyt)silan in 100 cm³ H₂O- und O₂-freiem Et₂O wurden unter Argon bei Raumtemperatur mit 13 cm³ einer 20%igen Lösung von Butyllithium in Toluol versetzt und anschließend 3 Stunden zum Rückfluß erhitzt. Das Lösemittel wurde im Vakuum entfernt und der Rückstand mit 150 ml H₂O- und O₂-freiem Hexan über eine G3-Schlenkfritte filtriert, mit 50 ml H₂O- und O₂-freiem Hexan nachgewaschen und getrocknet (0,1 mbar, RT). Der Feststoff wurde bei -78°C zu einer Suspension von 4,0 g (17 mmol) Zirkoniumtetrachlorid in 100 cm³ Methylenchlorid gegeben und im Verlauf von 18 Stunden unter magn. Rühren auf Raumtemperatur erwärmt. Der Ansatz wurde über eine G3-Fritte filtriert und der Rückstand portionsweise mit insgesamt 200 cm³ Methylenchlorid nachextrahiert. Die vereinigten Filtrate wurden im Vakuum vom Lösemittel befreit und erneut aus Methylenchlorid umkristallisiert. Es wurden 4,2 g (34.%) der racemischen und der meso-Form im Verhältnis 1:1 erhalten. Durch erneutes Umkristallisieren aus Toluol wurde der racemische Komplex Dimethylsilandiylbis(2-methyl-4-(3-chinolyl)-indenyl)zirkoniumdichlorid (2) in Form gelber Kristalle erhalten.

¹H-NMR (100 MHz, CDCl₃): 7,2 - 8,3 (m, 18 H, arom. H), 6,6 (s, 2H, H-C(3)), 2,2 (s, 6H, CH₃), 1,2 (s, 6H, CH₃Si). Massenspektrum: 731 M⁺, korrektes Zerfallsmuster.

## Patentansprüche

1. Metallocenverbindung der Formel I
R⁵ ₙCp¹Cp²M¹R¹R² (I)
worin Cp¹ und Cp² unabhängig voneinander gleich oder verschieden sind und eine unsubstituierte oder substituierte Cyclopentadienylgruppe bedeuten, n = Null oder 1 ist, R⁵ eine Verbrückung ist, M¹ ein Metall der Gruppe IVb, Vb oder Vlb des Periodensystems der Elemente ist, R¹ und R² gleich oder verschieden sind und ein Wasserstoffatom, eine C₁-C₁₀-Alkylgruppe, eine C₁-C₁₀-Alkoxygruppe, eine C₆-C₁₄-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe, ein Halogenatom oder eine NR⁶₂-Gruppe, worin R⁶ gleich oder verschieden eine C₁-C₁₀-Alkyl- oder eine C₆-C₁₄-Arylgruppe bedeuten, **dadurch gekennzeichnet, daß** mindestens eine der beiden Gruppen Cp¹ und Cp² eine substituierte Cyclopentadienylgruppe ist, welche mindestens einen cyclischen C₅-C₃₀-kohlenstoffhaltigen Rest trägt, der mindestens ein Heteroatom im Ring enthält, oder ein anneliertes C₂-C₃₀kohlenstoffhaltiges Ringsystem trägt, welches mindestens ein Heteroatom im Ring enthält, und wobei der cyclische C₅-C₃₀-kohlenstoffhaltige Rest und das annelierte C₂-C₃₀-kohlenstoffhaltige Ringsystem gesättigt oder ungesättigt sein können und N, P oder S als Heteroatome im Ring enthalten, die auch Reste tragen können, die nicht Bestandteil des Rings sind.

2. Metallocenverbindung gemäß Anspruch 1, **dadurch gekennzeichnet, daß** die Metallocenverbindung die Formel II aufweist 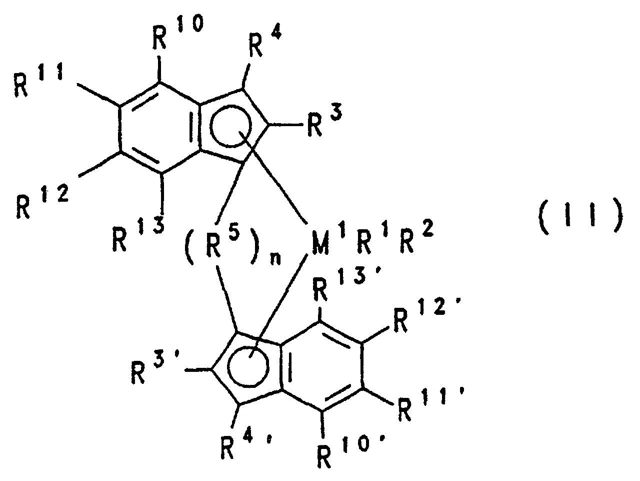 worin
M¹ ein Metall der Gruppe IVb, Vb oder VIb des Periodensystems der Elemente ist,
R¹ und R² gleich oder verschieden sind und ein Wasserstoffatom, eine C₁-C₁₀-Alkylgruppe, eine C₁-C₁₀-Alkoxygruppe, eine C₆-C₁₄-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe, ein Halogenatom oder eine NR⁶₂-Gruppe, worin R⁶ gleich oder verschieden eine C₁-C₁₀-Alkyl- oder eine C₆-C₁₄-Arylgruppe bedeuten,
die Reste R³ und R^{3'} gleich oder verschieden sind und ein Wasserstoffatom, ein Halogenatom, eine C₁-C₁₀-Alkylgruppe, die halogeniert sein kann, eine C₆-C₁₄-Arylgruppe, die halogeniert sein kann, einen NR⁷₂-, -SR⁷-, -OsiR⁷₃-, -SiR⁷₃- oder -PR⁷₂-Rest bedeuten, worin R⁷ ein Halogenatom, eine C₁-C₁₀-Alkylgruppe oder eine C₆-C₁₄-Arylgruppe ist,
R⁴ und R⁴ gleich oder verschieden sind und ein Wasserstoffatom, ein Halogenatom, eine C₁-C₁₀-Alkylgruppe, die halogeniert sein kann, eine C₆-C₁₄-Arylgruppe, die halogeniert sein kann, einen NR⁷₂-, -SR⁷-, -OSiR⁷₃-, -SiR⁷₃oder -PR⁷₂-Rest bedeuten, worin R⁷ ein Halogenatom, eine C₁-C₁₀-Alkylgruppe oder eine C₆-C₁₄-Arylgruppe ist,
n = Null oder 1 ist,
R⁵ eine Verbrückung bedeutet,
und R¹⁰, R¹¹, R¹², R¹³, R^{10'}, R^{11'}, R^{12'} und R^{13'} gleich oder verschieden sind und ein Wasserstoffatom, eine C₁-C₁₀-Alkyl-, eine C₁-C₁₀-Fluoralkyl-, eine C₆-C₃₀-Aryl-, eine C₆-C₁₀-Fluoraryl-, eine C₂-C₁₀-Alkenyl-, eine C₇-C₄₀-Arylalkyl-, eine C₇-C₄₀-Alkylaryl- oder eine C₈-C₄₀-Arylalkenylgruppe sind, oder zwei oder mehr der Reste R¹⁰, R¹¹, R¹², R¹³, R^{10'}, R^{11'}, R^{12'} und R^{13'} zusammen ein C₄-C₃₀-Ringsystem bilden, wobei mindestens einer der Reste R¹⁰, R¹¹, R¹², R¹³, R^{10'}, R^{11'}, R^{12'} und R^{13'} einen cyclischen C₅-C₃₀-Kohlenwasserstoffrest bedeutet, der mindestens ein Heteroatom im Ring enthält, oder zwei oder mehr der Reste R¹⁰, R¹¹, R¹², R¹³, R^{10'}, R^{11'}, R^{12'} und R^{13'} zusammen ein anneliertes C₂-C₃₀-kohlenstoffhaltiges Ringsystem bilden, welches mindestens ein Heteroatom im Ring enthält.

3. Katalysatorkomponente, enthaltend mindestens eine Metallocen-Verbindung gemäß Anspruch 1 oder 2 und mindestens einen Cokatalysator.

4. Katalysatorkomponente gemäß Anspruch 3, worin der Cokatalysator ein Aluminoxan ist.

5. Katalysatorkomponente gemäß Anspruch 3 oder 4, zusätzlich enthaltend einen Träger.

6. Verfahren zur Herstellung eines Polyolefins durch Polymerisation mindestens eines Olefins in Gegenwart eines Katalysators, welcher mindestens eine Metallocenverbindung und mindestens einen Cokatalysator enthält, **dadurch gekennzeichnet, daß** das Metallocen eine Verbindung der Formel I gemäß Anspruch 1 oder 2, ist.

7. Verwendung einer Metallocenverbindung der Formel I gemäß Anspruch 1 oder 2 zur Olefinpolymerisation.

## Claims

1. A metallocene compound of the formula I
R⁵ ₙCp¹Cp²M¹R¹R² (I)
where Cp¹ and Cp² are, independently of one another, identical or different and are each an unsubstituted or substituted cyclopentadienyl group, n = zero or 1, R⁵ is a bridge, M¹ is a metal of group IVb, Vb or VIb of the Periodic Table of the Elements, R¹ and R² are identical or different and are each a hydrogen atom, a C₁-C₁₀-alkyl group, a C₁-C₁₀-alkoxy group, a C₆-C₁₄-aryl group, a C₆-C₁₀-aryloxy group, a C₂-C₁₀-alkenyl group, a C₇-C₄₀-arylalkyl group, a C₇-C₄₀-arylalkyl group, a C₈-C₄₀-arylalkenyl group, an OH group, a halogen atom or an NR⁶₂ group, where R⁶ are identical or different and are each a C₁-C₁₀-alkyl or a C₆-C₁₄-aryl group wherein at least one of the two groups Cp¹ and Cp² is a substituted cyclopentadienyl group which bears at least one cyclic C₅-C₃₀-radical containing at least one heteroatom in the ring or bears a fused-on C₂-C₃₀ ring system containing at least one heteroatom in the ring, where the cyclic C₅-C₃₀-radical and the fused-on C₂-C₃₀ ring system can be saturated or unsaturated, and contain, as heteroatoms in the ring, N, P or S which can also bear radicals which are not constituents of the ring.

2. A metallocene compound as claimed in claim 1 having the formula II 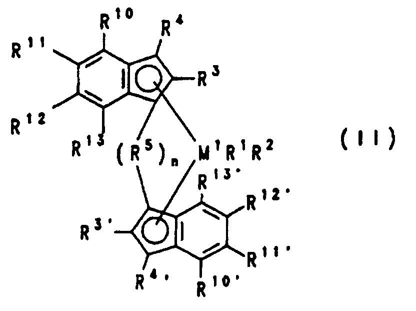 where
M¹ is a metal of group IVb, Vb or VIb of the Periodic Table of the Elements,
R¹ and R² are identical or different and are each a hydrogen atom, a C₁-C₁₀-alkyl group, a C₁-C₁₀-alkoxy group, a C₆-C₁₄-aryl group, a C₆-C₁₀-aryloxy group, a C₂-C₁₀-alkenyl group, a C₇-C₄₀-arylalkyl group, a C₇-C₄₀-alkyaryrl group, a C₈-C₄₀-arylalkenyl group, an OH group, a halogen atom or an NR⁶₂ group, where R⁶ are identical or different and are each a C₁-C₁₀-alkyl or a C₆-C₁₄-aryl group
the radicals R³ and R^{3'} are identical or different and are each a hydrogen atom, a halogen atom, a C₁-C₁₀-alkyl group which can be halogenated, a C₆-C₁₄-aryl group which can be halogenated, an NR⁷₂-, -SR⁷-, -OSiR⁷₃-, -SiR⁷₃- or -PR⁷₂ radical, where R⁷ is a halogen atom, a C₁-C₁₀-alkyl group or a C₆-C₁₄-aryl group,
R⁴ and R^{4'} are identical or different and are each a hydrogen atom, a halogen atom, a C₁-C₁₀-alkyl group which can be halogenated, a C₆-C₁₄-aryl group which can be halogenated, an NR⁷₂-, -SR⁷-, -OSiR⁷₃-, -SiR⁷₃- or -PR⁷₂ radical, where R⁷ is a halogen atom, a C₁-C₁₀-alkyl group or a C₆-C₁₄-aryl group,
n = zero or 1,
R⁵ is a bridge,
and R¹⁰, R¹¹, R¹², R¹³, R^{10'}, R^{11'}, R^{12'} and R^{13'} are identical or different and are each a hydrogen atom, a C₁-C₁₀-alkyl group, a C₁-C₁₀-fluoroalkyl group, a C₆-C₃₀-aryl group, a C₆-C₁₀-fluoroaryl group, a C₂-C₁₀-alkenyl group, a C₇-C₄₀-arylalkyl group, a C₇-C₄₀-alkylaryl group or a C₈-C₄₀-arylalkenyl group, or two or more of the radicals R¹⁰, R¹¹, R¹², R¹³, R^{10'}, R^{11'}, R^{12'} and R^{13'} together form a C₄-C₃₀ ring system, where at least one of the radicals R¹⁰, R¹¹, R¹², R¹³, R^{10'}, R^{11'}, R^{12'} and R^{13'} is a cyclic C₅-C₃₀-hydrocarbon radical containing at least one heteroatom in the ring, or two or more of the radicals R¹⁰, R¹¹, R¹², R¹³, R^{10'}, R^{11'}, R^{12'} and R^{13'} together form a fused-on C₂-C₃₀ ring system containing at least one heteroatom in the ring.

3. A catalyst component comprising at least one metallocene compound as claimed in claim 1 or 2 and at least one cocatalyst.

4. A catalyst component as claimed in claim 3, wherein the cocatalyst is an aluminoxane.

5. A catalyst component as claimed in claim 3 or 4 additionally containing a support.

6. A process for preparing a polyolefin by polymerization of at least one olefin in the presence of a catalyst comprising at least one metallocene compound and at least one cocatalyst, wherein the metallocene is a compound of the formula I as claimed in claim 1 or 2.

7. Use of a metallocene compound of the formula I as claimed in claim 1 or 2 for olefin polymerization.

## Revendications

1. Composé métallocène de formule I
R⁵ ₙCp¹Cp²M¹R¹R² (I)
dans laquelle Cp¹ et Cp² sont indépendamment l'un de l'autre identiques ou différents et représentent chacun un groupe cyclopentadiényle substitué ou non substitué, n vaut zéro ou 1, R⁵ est un chaînon pontant, M¹ est un métal du groupe IVb, Vb ou VIb du Système Périodique des Eléments, R¹ et R² sont identiques ou différents et représentent chacun un atome d'hydrogène, un groupe alkyle en C₁-C₁₀, un groupe alcoxy en C₁-C₁₀, un groupe aryle en C₆-C₁₄, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀, un groupe OH, un atome d'halogène ou un groupe NR⁶₂ où les radicaux R⁶ sont identiques ou différents et représentent chacun un groupe alkyle en C₁-C₁₀ ou aryle en C₆-C₁₄, **caractérisé en ce qu'**au moins l'un des deux groupes Cp¹ et Cp² est un groupe cyclopentadiényle substitué qui porte au moins un radical cyclique carboné en C₅-C₃₀, qui contient au moins un hétéroatome sur le noyau, ou encore porte un système cyclique carboné en C₂-C₃₀ condensé, qui contient au moins un hétéroatome dans le noyau, et où le radical hydrocarboné cyclique en C₅-C₃₀ et le système cyclique carboné condensé en C₂-C₃₀ peuvent être saturés ou insaturés et contiennent N, P ou S en tant qu'hétéroatomes dans le noyau, qui peuvent aussi porter des radicaux qui ne sont pas des constituants du cycle.

2. Composé métallocène selon la revendication 1, **caractérisé en ce que** le composé métallocène a la formule II 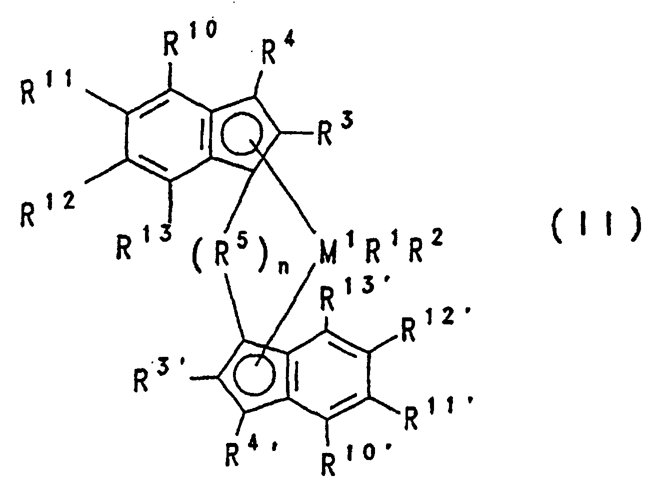 dans laquelle
M¹ est un métal du groupe IVb, Vb ou VIb du Système Périodique des Eléments,
R¹ et R² sont identiques ou différents et représentent chacun un atome d'hydrogène, un groupe alkyle en C₁-C₁₀, un groupe alcoxy en C₁-C₁₀, un groupe aryle en C₆-C₁₄, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀, un groupe OH, un atome d'halogène ou un groupe NR⁶₂ dans lequel les radicaux R⁶ sont identiques ou différents et représentent chacun un groupe alkyle en C₁-C₁₀ ou aryle en C₆-C₁₄,
les radicaux R³ et R^{3'} sont identiques ou différents et représentent chacun un atome d'hydrogène, un atome d'halogène, un groupe alkyle en C₁-C₁₀ pouvant être halogéné, un groupe aryle en C₆-C₁₄ pouvant être halogéné, un radical NR⁷₂, -SR⁷-, -OSiR⁷₃, -SiR⁷₃ ou -PR⁷₂, où R⁷ est un atome d'halogène, un groupe alkyle en C₁-C₁₀ ou un groupe aryle en C₆-C₁₄,
les radicaux R⁴ et R^{4'} sont identiques ou différents et représentent chacun un atome d'hydrogène, un atome d'halogène, un groupe alkyle en C₁-C₁₀ pouvant être halogéné, un groupe aryle en C₆-C₁₄ pouvant être halogéné, un radical NR⁷₂, -SR⁷-, -OSiR⁷₃, -SiR⁷₃ ou -PR⁷₂, où R⁷ est un atome d'halogène, un groupe alkyle en C₁-C₁₀ ou un groupe aryle en C₆-C₁₄,
n vaut 0 ou 1,
R⁵ est un chaînon pontant,
et R¹⁰, R¹¹, R¹², R¹³, R^{10'}, R^{11'}, R^{12'} et R^{13'} sont identiques ou différents et représentent chacun un atome d'hydrogène, un groupe alkyle en C₁-C₁₀, fluoralkyle en C₁-C₁₀, aryle en C₆-C₃₀, fluoraryle en C₆-C₁₀, alcényle en C₂-C₁₀, arylalkyle en C₇-C₄₀, alkylaryle en C₇-C₄₀ ou arylalcényle en C₈-C₄₀, ou encore au moins deux des radicaux R¹⁰, R¹¹, R¹², R¹³, R^{10'}, R^{11'}, R^{12'} et R^{13'} forment ensemble un système cyclique en C₄-C₃₀, où au moins l'un des radicaux R¹⁰, R¹¹, R¹², R¹³, R^{10'}, R^{11'}, R^{12'} et R^{13'} représente un radical hydrocarboné cyclique en C₅-C₃₀, qui contient au moins un hétéroatome dans le noyau, ou encore au moins deux des radicaux R¹⁰, R¹¹, R¹², R¹³, R^{10'}, R^{11'}, R^{12'} et R^{13'} forment ensemble un système cyclique carboné condensé en C₂-C₃₀ qui contient au moins un hétéroatome dans le noyau.

3. Composant catalyseur contenant au moins un composé métallocène selon la revendication 1 ou 2 et au moins un co-catalyseur.

4. Composant catalyseur selon la revendication 3, dans lequel le co-catalyseur est un aluminoxane.

5. Composant catalyseur selon la revendication 3 ou 4, qui contient en outre un support.

6. Procédé de préparation d'une polyoléfine par polymérisation d'au moins une oléfine en présence d'un catalyseur qui contient au moins un composé métallocène et au moins un co-catalyseur, **caractérisé en ce que** le métallocène est un composé de formule I selon la revendication 1 ou 2.

7. Utilisation d'un composé métallocène de formule I selon la revendication 1 ou 2 pour la polymérisation d'oléfines.
